# EUROPEAN PATENT APPLICATION

(11) **EP 2 738 701 A2**
(43) Date of publication of application: **04.06.2014**
(21) Application number: 13195312.7
(22) Date of filing: 02.12.2013
(51) Int. Cl.: G06F 17/50

(54) **Method and apparatus for statistical electronic circuit simulation**

(30) Priority: 03.12.2012 US 201213692075
(71) Applicant: Hitachi, Ltd., Tokyo 100-8280 (JP)
(72) Inventor: Wang, Can, Farmington Hills, MI Michigan 48335 (US); McCune, Donald J., Farmington Hills, MI Michigan 48335 (US); Phatak, Sujit, Farmington Hills, MI Michigan 48335 (US)
(74) Representative: MERH-IP Matias Erny Reichl Hoffmann

(57) **Abstract**

A method and apparatus using a programmed processor for electronic circuit simulation in which raw data containing both independent and dependent variables is acquired. That raw data is analyzed using an analysis method which generates relationships between the independent and the dependent variables. A mathematical model is created from those relationships and this is repeated for at least two different analysis methods. The statistical error between the raw data and the computed dependent variables is then calculated and the analysis method having the smallest statistical error with sufficient sample size is selected.

## Description

### BACKGROUND OF THE INVENTION

### I. FIELD OF THE INVENTION

The present invention relates generally to a method and apparatus for the analysis of an electronic circuit.

### II. DESCRIPTION OF RELATED ART

As systems containing electronic circuits become increasingly complex, the proper testing of the electronic circuits to ensure satisfactory performance throughout a wide range of operating conditions has become increasingly problematic. For example, a modem automotive vehicle contains many electronic circuits which control the overall operation of the vehicle. These electronic circuits must be tested under a variety of different operating conditions and variations of the electronic circuits. For example, most components in an electronic circuit have a known manufacturing tolerance or known variance in the value of the component. For complete testing of such circuits, it is necessary to accommodate and, if necessary, correct for variations in the values of the electronic components which form the circuit.

Previously, it has been the practice to prototype the circuit for the system so that the circuit has at least one input or independent variable and at least one output or dependent variable. Raw data is then obtained from the prototype by varying the values of the input or independent variables and measuring the effect on the dependent variables. This raw data forms a data set with known inputs or independent variables as well as the outputs or dependent variables over a range of different values for the independent variables.

When obtaining the set of raw data from the circuit under test, it has been the previously known practice to measure the independent and dependent variables for the circuit under a wide variety of environmental conditions. For example, if temperature is suspected as being one of the environmental variables, the circuit testing will be performed under different temperatures to gauge the effect, if any, of temperature differences on the output or dependent variables. Other environmental variables, such as electronic noise, may also be varied under the circuit testing to determine the effect of the environmental factor on the operation of the overall circuit.

Since the raw data is obtained by humans and test measurement, the raw data almost invariably will contain some errors caused by human errors in the testing procedure. Consequently, the raw data is often preprocessed to remove data values that are clearly in error. The preprocessing step, however, is optional but, if performed at the end of the preprocessing step, only valid raw data will remain in the raw data set.

After the invalid data has been removed from the raw data set, the raw data is oftentimes organized for subsequent analysis. For example, optionally the raw data set may be organized through data averaging and/or low-pass filtering in order to facilitate the subsequent analysis of the data. Eventually, however, the remaining raw data in the raw data set will be stored as a document in a computer-accessible file. For example, a spreadsheet is oftentimes used to organize the raw data set in order to simplify its entry to the computer or processor in preparation for the data analysis.

The raw data, optionally preprocessed, is then ready for data analysis. There are many different types of data analysis, such as analysis of variance, T-test, worst-case analysis, regression analysis, etc., which may be performed on the data. Each data analysis method generates its own set of relationships between the independent and dependent variables for the electronic circuit and these relationships between the independent and dependent variables together form a mathematical model with each data analysis method having its own mathematical model. The accuracy of the mathematical model is then determined by inputting the independent variables from the raw data set to the mathematical model and comparing the dependent variables or outputs from the mathematical model with the actual dependent variables in the raw data set. Any difference between the computed data values from the mathematical model and the actual values from the raw data forms an error and the analysis of this error between the computed data values and the raw data is analyzed statistically to determine the accuracy of the selected analysis method for the data.

In some situations, the statistical error of the mathematical model, assuming a sufficient sample size, is sufficiently accurate that the mathematical model can be used for further testing of the electronic circuit. However, in other cases the selected analysis method produces an unacceptable error between the computed dependent variables and the measured variables from the raw data. When this occurs, it is necessary to select a different analysis method and apply that different analysis method to the raw data until a mathematical model having an acceptable error between the computed data and the raw data is identified. That procedure, however, is not only time consuming, but cumbersome.

### SUMMARY OF THE PRESENT INVENTION

The present invention provides a method and apparatus using a programmed processor for electronic circuit simulation which overcomes the above-mentioned disadvantages of the previously known methods.

In brief, in the method of the present invention raw data is first collected from the circuit to form a raw data set of the independent or input variables and the dependent or output variables. The raw data set is taken, if applicable, under different environmental conditions, such as different temperatures, random electrical noise, etc., of the type that the electronic circuit would be subjected to during normal operation.

Optionally, the raw data is preprocessed to remove incorrect data. Conventional preprocessing methods may be used, such as data averaging and low-pass filtering. The resulting raw data, whether preprocessed or not, is then organized into a computer-readable file, such as a spreadsheet.

Unlike the previously known methods for circuit simulation, the raw data is then analyzed using at least two, and preferably more, data analysis methods to generate the relationships between the dependent and independent variables of the circuit. These data analysis methods can include, for example, ANOVA (analysis of variance) analysis method, T-test method of analysis, worst-case analysis, and the like. In each case, the analysis method generates its own relationships between the independent and dependent variables for the electronic circuit.

Using the relationships between the independent and dependent variables, each analysis method constructs a mathematical model which defines the relationship between the dependent and independent variables. The mathematical model will differ from one analysis method to the other and can include, for example, first order equations, second order equations, higher order equations, differential equations, and the like.

After the mathematical models are constructed for each analysis method, the accuracy of each model is then statistically determined. This is accomplished by utilizing the same set of independent variables in the raw data set and computing the dependent variables as a function of the mathematical model. Unless the computed values for the dependent variables in the mathematical model are identical to the actual data in the raw data set, which is rarely the case, an error will exist between the computed data for the dependent variables and the actual raw data for the dependent variables for the various values of the independent variables in both the raw data and the mathematical model.

Assuming that a sufficient number of data for the model exists to provide an accurate representation, the accuracy of the mathematical model is then determined using standard statistical techniques. For example, the standard deviation for each model can be determined to ensure that the mathematical model meets the minimum accuracy requirements for the circuit application.

The accuracies for the different mathematical models for the different analysis methods are then compared and the mathematical model having the highest statistical accuracy is then selected by the programmed processor provided that the sample size for that particular mathematical model meets the minimum requirements for statistical reliability.

Although conventional mathematical methods may be utilized to select the analysis method and its resulting mathematical model with the highest statistical accuracy, optionally fuzzy logic is employed to make that selection. The reasoning logic to select the most accurate mathematical model and analysis method also preferably accesses a computer expert database containing known data for the accuracy of the analysis methods as well as the required sample sizes.

After selection of the mathematical model and analysis method exhibiting the highest accuracy for the simulation, a simulation model is preferably constructed for the electronic circuit. Any conventional method, such as Spice, PSpice, Saber, and so forth may be used to construct the simulated circuit and facilitate further testing of the circuit.

### BRIEF DESCRIPTION OF THE DRAWING

A better understanding of the present invention will be had upon reference to the following detailed description when read in conjunction with the accompanying drawing, wherein like reference characters refer to like parts throughout the several views, and in which:
FIG. 1 is a process diagram illustrating a preferred embodiment of the method of the present invention;
FIG. 2 is a flowchart illustrating the method of the present invention executed by a programmed processor;
FIG. 3 is a flowchart illustrating a portion of the preferred method of the present invention;
FIG. 4 is a method flowchart of the reasoning module of the present invention;
FIG. 5 is a statistical graph of error versus standard deviation;
FIG. 6 is a table illustrating the relationship between error and standard deviation;
FIG. 7 is a method flowchart illustrating the logic decision engine using fuzzy logic; and
FIG. 8 is a schematic diagram of circuitry to implement the method.

### DETAILED DESCRIPTION OF A PREFERRED EMBODIMENT OF THE PRESENT INVENTION

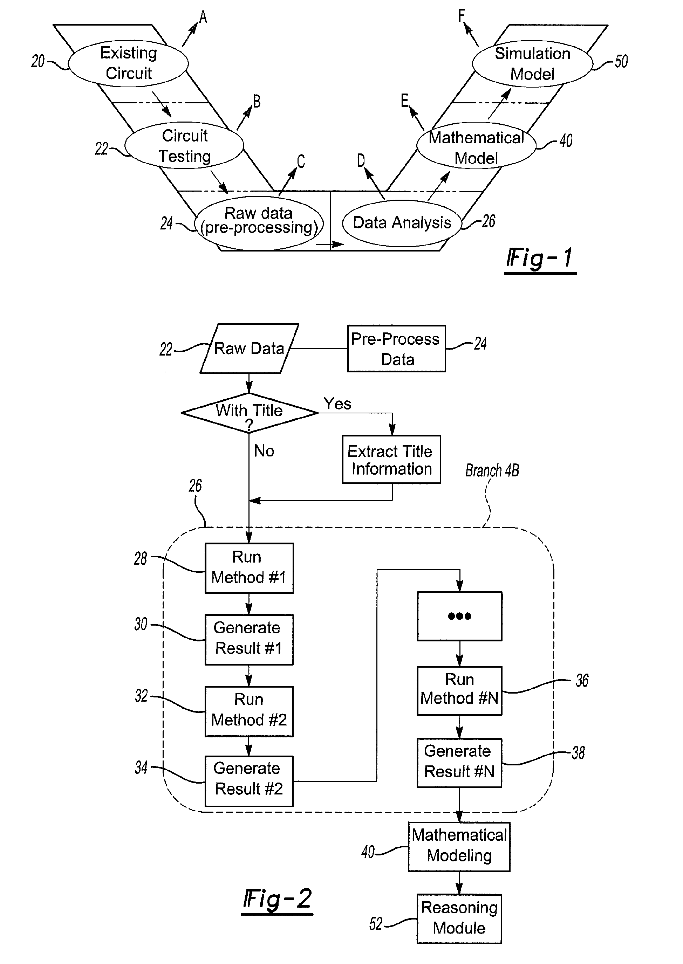

With reference first to FIG. 1, the steps conducted during a circuit simulation modeling process are broadly illustrated. At step 20, the electronic circuit is first constructed, typically by constructing a prototype. This electronic circuit, furthermore, includes at least one independent variable or input and at least one dependent variable or output. Consequently, as the independent variable changes in value, the circuit functions to vary the output of the dependent variable in a repeatable fashion.

With reference now to FIGS. 1 and 2, FIG. 2 illustrates a flowchart of a program executed by a programmed processor of a preferred embodiment of the present invention. After the circuit is constructed at step 20, step 20 proceeds to step 22 where raw data is obtained from the circuit constructed at step 20. In order to obtain the raw data, the technician varies the values of the inputs for the circuit and then measures the values of the outputs for the circuit. A plurality of different inputs are applied to the circuit at step 22 and for each set of different inputs, the outputs from the circuit are measured and recorded. Typically, the recordation of the data at step 22 is performed manually by the technician.

In addition to simply varying the value of the inputs at step 22, the performance of the circuit may also vary as a function of environmental conditions. For example, the temperature of the circuit, presence of electronic noise, and the like may vary the performance of the circuit. Consequently, the collection of the raw data into a raw data set at step 22 may be conducted under different environmental conditions and these different environmental conditions also become a part of the raw data set with the environmental condition, such as temperature, constituting a separate "input" or independent variable for the electronic circuit.

After the raw data has been manually collected at step 22, step 22 proceeds to step 24 where the raw data is optionally preprocessed to remove erroneous data. Since the raw data was manually collected at step 22, the raw data inevitably includes some human error. The optional preprocessing step 24 may be used to eliminate, or at least reduce, that human error.

Any conventional preprocessing may be used to ensure that the raw data is valid data. For example, data averaging or low-pass filtering may be applied to the raw data in order to remove data anomalies which represent invalid data. However, the data remaining after the preprocessing step 24, if performed, still remains raw data. Step 24 then proceeds to step 26 where the raw data is analyzed.

With reference now to FIG. 2, as will become shortly apparent, the raw data is analyzed using at least two, and preferably more, different analysis methods. These analysis methods may include, for example, ANOVA analysis, T-test analysis, worst-case analysis, and the like.

More specifically, at step 28 a first method of analysis, e.g. ANOVA, is performed on the raw data. As a function of that analysis using conventional analysis tools, the analysis methods generate their results at step 30. The results generated at step 30, furthermore, consist of mathematical relationships between the inputs or independent variables and the outputs or dependent variables for the electronic circuit. These mathematical formulas may take a variety of different forms, such as first, second, or even higher order equations, exponential equations, differential equations and the like. The results generated at step 30 are stored by the processor in computer memory or other storage medium. Step 30 then proceeds to step 32.

At step 32 the raw data is again analyzed by using a different method of analysis. Using the different method of analysis, step 32 proceeds to step 34 where the second method of analysis generates mathematical relationships between the inputs or independent variables and the outputs or dependent variables for the circuit. As before, these relationships may be of any form, such as first, second, or even higher order equations, exponential equations, differential equations and the like.

The above process, i.e. analysis of the raw data by a different analysis method and the generation of the mathematical relationships between the inputs and outputs for the circuit, proceeds through analysis method N at steps 36 and 38.

After all of the analysis methods have been applied to the same raw data, each analysis method generating its own set of mathematical relationships between the inputs and the outputs, the data analysis step 26 proceeds to step 40 as shown in both FIGS. 1 and 2.

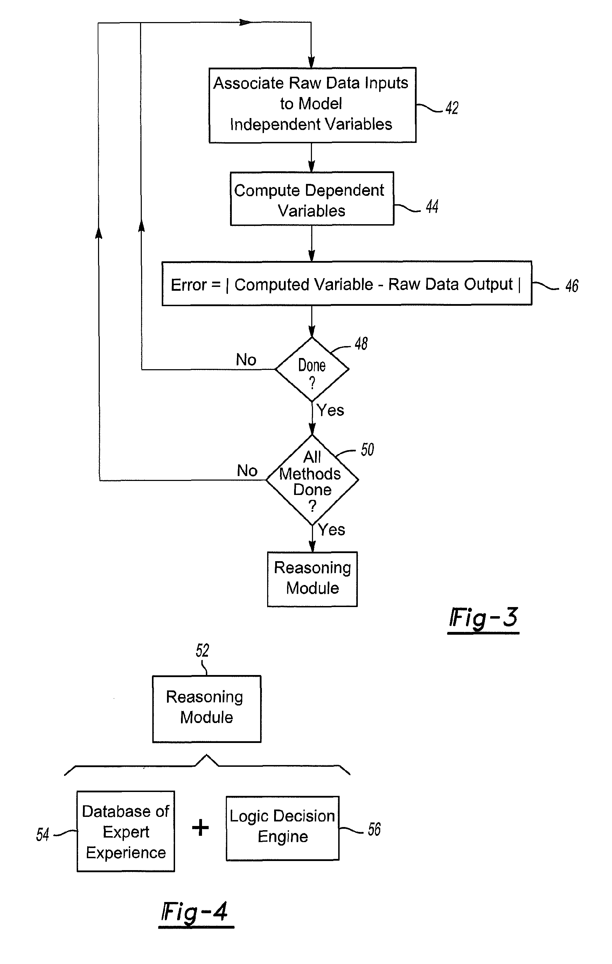

At step 40, the mathematical relationships between the dependent and independent variables for each different mathematical model, one model associated with each different analysis method, are grouped to create the mathematical model. The number of different relationships or equations for each different mathematical model will differ. However, ideally each mathematical model will be able to predict the value of its outputs or dependent variables as a function of the circuit inputs or independent variables with only a minimum of error. An exemplary flowchart illustrating the calculation of the error of the mathematical model is shown in FIG. 3.

With reference then to FIG. 3, for the first analysis method executed at step 28 and which generated its own mathematical relationships at step 30 and its own mathematical model at step 40, step 42 associates the raw data inputs to the circuit with the independent variables of the mathematical model. Step 42 then proceeds to step 44.

Step 44 then calculates or computes the value of the dependent variables using the raw data input values and the mathematical formulae of the mathematical model which correspond to the analysis method of steps 28 and 30 (FIG. 2). Step 44 then proceeds to step 46. At step 46, the error between the computed variable using the mathematical model and the raw data output or dependent variables is computed as the absolute value of the difference between the two values. Step 46 then proceeds to step 48.

At step 48, the processor determines whether or not all of the inputs of the raw data set have been analyzed for the first analysis method. If not, step 48 branches back to step 42 where the above analysis is repeated for the next data input of the raw data set. Otherwise, step 48 proceeds to step 50. At step 50 the program determines whether or not all of the different analysis methods, i.e. analysis method 1 through analysis method N, have been analyzed to compute the error between the mathematical model dependent variables and the outputs from the raw data in the raw data set. If not, step 50 branches back to step 42 and reiterates the above-described process for the next analysis method. Conversely, if all the analysis methods have been analyzed and the errors determined and stored by the processor, step 50 proceeds to step 52 which is the reasoning module to select the best analysis method for the particular circuit under examination.

With reference now to FIG. 4, the reasoning module step 52, which ultimately determines which analysis method is best suited for the particular circuit in question, broadly includes a computer database 54 of expert experience as well as a logic decision engine. The database 54 will contain, for example, the adequacy of the sample size for the various analysis methods performed at step 26 (FIG. 2). The database of expert experience may also contain data regarding modeling experience from previous projects.

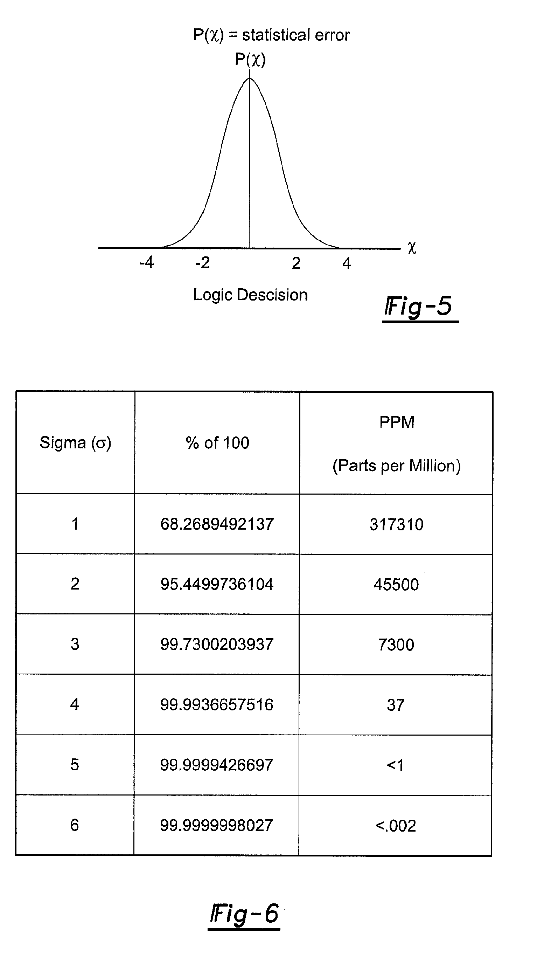

In the logic decision engine 56, a primary factor considered by the logic decision engine 56 is the error P(x) between the raw data output values and the computed values from the mathematical model for a given set of input or independent variables. For example, as shown in FIG. 5, the statistical error P(x) as a function of the standard deviation σ is shown. As well known in statistics, the greater the standard deviation σ, the less error in the results.

For example, as shown in FIG. 6, a table of sigma versus parts per million is shown. A sigma of 6 is difficult to obtain for most mathematical models but indicates an error of less than .002 parts per million. Conversely, a sigma or standard deviation of 3 represents an accuracy of 99.7% which is acceptable for many applications, such as automotive circuitry.

After the accuracy of all of the analysis methods has been calculated, the logic decision engine 56 assigns an index to each method on a 100% scale with the highest index given to the most accurate mathematical model and vice versa. These index numbers, however, are also subject to input from the expert database 54 to ensure that an adequate number of samples are available for that particular analysis method. If not, a very low index is associated with that particular analysis method.

Although conventional statistical analysis may be applied to determine which of the different analysis methods is the most accurate, the logic decision engine 56 may use fuzzy logic in its determination of the most accurate analysis method. More specifically, the data from the mathematical models is inputted by the logic decision engine 56 at step 60. Step 60 then proceeds to step 62.

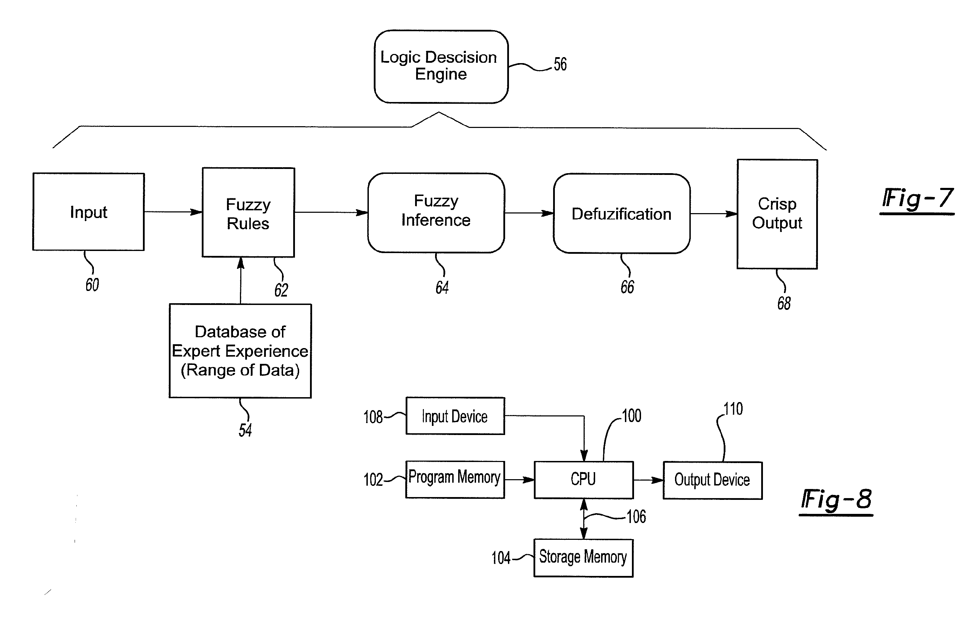

With reference to FIG. 7 at step 62 the fuzzy logic rules are obtained from the expert database 54. This range of fuzzy rules will contain ranges of data in a fuzzy data format. Step 62 then proceeds to step 64.

At step 64 the processor using the fuzzy rules determined at step 62 creates the fuzzy inferences for the data. Step 64 then proceeds to step 66.

At step 66, the processor performs defuzzification on the data after processing with the fuzzy inference at step 64. Any of several methods may be used to perform defuzzification. For example, centroid of area, maximum, bisector of area, mean of maximum, smallest of maximum, and largest of maximum are all different defuzzification methods used to obtain a crisp output. Any of these methods may be used to perform defuzzification in the instant invention and, preferably, the database 54 of expert experience contains an identification of which defuzzification method should be used to obtain optimal accuracy of the mathematical model.

With reference again to FIG. 1, following the above identified analysis methods and the automatic selection of the optimal method by a programmed processor, step 40 proceeds to step 70. At step 70, a mathematical model of the circuit is constructed using any conventional circuit simulation tool, such as Spice or PSpice. The simulated electronic circuit is then used for further testing and analysis of the overall circuit.

With reference now to FIG. 8, a schematic view is there shown of an exemplary hardware configuration capable of implementing the method of the present invention. The circuitry includes a central processing unit 100 which may be of any conventional construction. In the conventional fashion, the CPU receives input data and manipulates that data under control of a computer program.

Still referring to FIG. 8, a program memory block 102 contains the computer program or computer code executed by the CPU 100. In addition, a storage memory block 104 communicates with the CPU 100 through a bidirectional bus 106 to not only receive data for storage, but also to provide previously stored data to the CPU 100 for use by the CPU 100 when executing its computer program.

One or more input devices 108 also communicate with the CPU to provide the required input data, such as the raw data from the circuit, to the CPU 100. Typically, the CPU 100 will store this raw data as well as other input data in the storage memory block 104 for subsequent use by the CPU 100 when required. Furthermore, although the input device 108 may be a direct input device, such as a keyboard, more typically the input device 108 comprises a computer file which may be inputted by the CPU 100.

Lastly, the CPU communicates with one or more output devices 110 for use by the operator of the system. The output devices 110 may comprise, for example, video displays, printers, and/or the like.

In practice, the CPU 100 is programmed to execute the program illustrated in FIG. 2. More specifically, the CPU 100 includes means, such as the input device 108, to input the raw data. The CPU 100, once it has acquired the raw data from the input device 100 and under program control from the program stored in the program memory block 102, generates the various results from the different mathematical models as shown in steps 28-38 in FIG. 2.

Thereafter, under program control from the program memory block 102, the CPU generates the mathematical modeling at step 40 for each different method under program control of the method illustrated more fully in FIG. 3. Once all of the methods are completed at step 50 (FIG. 3) the CPU 100 under program control executes the logic decision engine 56 as well as accesses the database of expert experience 54 contained in the storage memory 104 to determine the best method. Optionally, the CPU 100 is programmed to utilize fuzzy logic to determine the best mathematical model.

From the foregoing, it can be seen that the present invention provides a circuit simulation method executed by a programmed processor which not only automates the analysis and mathematical modeling of the electronic circuit, but also automatically selects which of two or more analysis methods provides the optimal result from the simulation. Having described our invention, however, many modifications thereto will become apparent to those skilled in the art to which it pertains without deviation from the spirit of the invention as defined by the scope of the appended claims.

## Claims

1. A method using a programmed processor for electronic circuit simulation for a circuit comprising the steps of:
a) acquiring a set of raw data from the circuit, said raw data containing at least one independent variable and at least one dependent variable,
b) analyzing the raw data using an analysis method which generates relationships between the raw data independent and dependent variables,
c) generating a mathematical model from said relationships, said mathematical model having independent variables and computed dependent variables which correspond to the raw data independent and dependent variables,
d) reiterating steps b) and c) for at least one different analysis method,
e) using at least a portion of the set of raw data independent variables, determining the statistical error between the computed dependent variables and the corresponding raw data dependent variables for each mathematical model, and
f) selecting the analysis method and its associated mathematical model having the smallest error.

2. The method of claim 1 wherein said selecting step further comprises the step of determining that the sample size of the raw data exceeds a minimum amount for each mathematical model.

3. The method of claim 2 and comprising the steps of creating a database containing data representing adequate sample sizes for different analyses methods and wherein said step of determining whether the sample size of the raw data exceeds a minimum amount for each mathematical model comprises the step of accessing said database and comparing the actual sample size with the database data.

4. The method of at least one of claims 1 to 3 wherein said step of determining the statistical error comprises the step of determining the standard deviation between the computed dependent variables and the raw data dependent variables for each mathematical model.

5. The method of at least one of claims 1 to 4 and further comprising the step of preprocessing the raw data before said analyzing step.

6. The method of claim 5 wherein said preprocessing step comprises data averaging said raw data, and/or
wherein said preprocessing step comprises low-pass filtering said raw data.

7. The method of at least one of claims 1 to 6 wherein one of said analysis methods comprises an analysis of variance method;
wherein one of said analysis methods comprises a worst-case analysis method; and/or wherein one of said analysis methods comprises a T-test method.

8. The method of at least one of claims 1 to 7 and further comprising the steps of creating a circuit simulation model following said selecting step.

9. The method of at least one of claims 1 to 8 wherein said selecting step is performed using fuzzy logic, and/or.
wherein selecting step is performed by the steps of:
inputting the error and sample size for each analysis method,
obtaining fuzzy logic rules contained in a database for said error and sample size for each analysis method,
obtaining fuzzy data values for each analysis method based on the fuzzy logic rules, and
defuzzifying the fuzzy data values to obtain a crisp result.

10. An apparatus using a programmed processor for electronic circuit simulation for a circuit comprising:
a) means for acquiring a set of raw data (108) from the circuit, said raw data containing at least one independent variable and at least one dependent variable,
b) means for analyzing the raw data using an analysis method which generates relationships between the raw data independent and dependent variables,
c) means for generating a mathematical model from said relationships, said mathematical model having independent variables and computed dependent variables which correspond to the raw data independent and dependent variables,
d) means for reiterating steps b) and c) for at least one different analysis method,
e) means for using at least a portion of the set of raw data independent variables, determining the statistical error between the computed dependent variables and the corresponding raw data dependent variables for each mathematical model, and
f) means for selecting the analysis method and its associated mathematical model having the smallest error.

11. The apparatus of claim 10 wherein said means for selecting further comprises means for determining that the sample size of the raw data exceeds a minimum amount for each mathematical model.

12. The apparatus of claim 11 and comprising means for creating a database containing data representing adequate sample sizes for different analyses methods and wherein said means for determining whether the sample size of the raw data exceeds a minimum amount for each mathematical model comprises means for accessing said database (104) and comparing the actual sample size with the database data.

13. The apparatus of at least one of claims 10 to 12 wherein said means for determining the statistical error comprises means for determining the standard deviation between the computed dependent variables and the raw data dependent variables for each mathematical model.

14. The apparatus of at least one of claims 10 to 13 and further comprising means for preprocessing the raw data before said analyzing step, and/or
wherein said means for preprocessing the raw data, is adapted to perform data averaging of said raw data.

15. The apparatus of at least one of claims 10 to 14 wherein said means for selecting is adapted to use fuzzy logic.
